# EUROPÄISCHE PATENTSCHRIFT

(11) **EP 2 166 230 B1**
(45) Veröffentlichungstag und Bekanntmachung des Hinweises auf die Patenterteilung: **21.11.2018**
(21) Anmeldenummer: 08016513.7
(22) Anmeldetag: 19.09.2008
(51) Int. Cl.: F04D 13/06, F04D 29/40, F04D 29/58, H02K 5/22, H02K 11/33

(54) **PUMPENAGGREGAT**
PUMP POWER UNIT
GROUPE MOTOPOMPE

(43) Veröffentlichungstag der Anmeldung: 24.03.2010
(73) Patentinhaber: Grundfos Management A/S, 8850 Bjerringbro (DK)
(72) Erfinder: Stæhr, Uffe, 8382 Hinnerup (DK)
(74) Vertreter: Hemmer, Arnd

(56) Entgegenhaltungen:
- WO-A-2004/033241
- DE-A1- 19 527 879
- US-A- 3 316 845
- US-A- 5 324 171
- US-A- 6 132 184

## Beschreibung

Die Erfindung betrifft ein Pumpenaggregat mit einem Motorgehäuse und einem Klemmenkasten.

Pumpenaggregate weisen üblicherweise einen am Motor bzw. Statorgehäuse angesetzten Klemmenkasten auf, in welchem die elektrischen Anschlusselemente und elektronische Komponenten zur Steuerung des Motors angeordnet sind. Dabei gibt es Klemmenkästen, welche umfänglich angeordnet sind oder auch Klemmenkästen, welche axial am Statorgehäuse angeordnet sind. Da bei elektronisch gesteuerten Pumpen, insbesondere mit Frequenzumrichter, zahlreiche elektronische Bauteile im Klemmenkasten angeordnet werden müssen, gibt es auch solche Klemmenkästen, welche axialseitig des Statorgehäuses angeordnet sind und sich über den Außenumfang des Statorgehäuses hinaus erstrecken.

US 5,324,171 offenbart ein Pumpenaggregat mit einem Motorgehäuse und einem axialseitig an das Motorgehäuse angesetzten Schaltergehäuse, in welchem ein Schalter sowie ein Anschlussstecker untergebracht sind. Elektronische Komponenten sind in dem Schaltergehäuse nicht angeordnet.

WO 2004/033241 A1 offenbart ein Pumpenaggregat mit einem Statorgehäuse und einem am Außenumfang an das Statorgehäuse angesetzten Klemmenkasten, in welchem elektronische Bauteile angeordnet sind. Zur Kühlung der elektronischen Bauelemente sind diese nahe dem Pumpengehäuse angeordnet, durch welches ein Kühlmedium gefördert wird. So werden die elektronischen Bauteile durch das zu fördernde Medium gekühlt.

US 3,316,845 offenbart eine elektromotorisch angetriebene Pumpe mit einem im Gehäuse integrierten Schwimmerschalter.

US 6,132,184 offenbart eine elektrisch angetriebene hydraulische Pumpe, bei welcher elektronische Bauelemente so angeordnet sind, dass sie über das hydraulische Fluid gekühlt werden können.

Bei der Leistungselektronik im Inneren des Klemmenkastens stellt sich das Problem, dass Verlustwärme entsteht, welche abgeführt werden muss. Dazu werden üblicherweise Kühlkörper verwendet. Wenn diese Kühlköper im Inneren des Klemmenkastens angeordnet sind, sind bei herkömmlichen Klemmenkästen Lüftungsöffnungen erforderlich, um eine ausreichende Kühlluftzufuhr aus dem Inneren des Klemmenkastens heraus zu ermöglichen. Da Pumpenaggregate häufig in feuchter Umgebung eingesetzt werden, sind jedoch Öffnungen im Klemmenkasten unerwünscht bzw. stellen Probleme bei der Abdichtung der Teile des Klemmenkastens, in welchem die elektronischen Bauteile angeordnet sind, dar.

EP 1 582 751 A1 offenbart ein Pumpenaggregat mit einem elektrischen Antriebsmotor, an dessen Motorgehäuse ein Klemmenkasten angesetzt ist. Dieser Klemmenkasten weist einen axial an das Motorgehäuse angesetzten Abschnitt sowie einen sich am Umfangsbereich erstreckenden Abschnitt auf. Im Inneren des Klemmenkastens ist ein Wärmeverteiler, welcher aus Kunststoff ausgebildet sein kann, angeordnet. Ein den Wärmeverteiler überdeckender Deckel ist mit Öffnungen versehen, sodass Luft von außen durch den Wärmeverteiler strömen kann, um den Wärmeverteiler im Inneren zu kühlen. Das Gehäuse des Klemmenkastens benötigt somit Öffnungen, um den Lufteintritt und Luftaustritt zu ermöglichen. Diese Öffnungen bieten die Gefahr eines Eintritts von Verunreinigungen und Feuchtigkeit in das Innere des Klemmenkastens. Durch Verunreinigungen oder Verschluss der Öffnungen kann darüber hinaus der erforderliche Luftaustausch zur Kühlung des Wärmeverteilers im Inneren beeinträchtigt werden.

Im Hinblick auf diesen Stand der Technik ist es Aufgabe der Erfindung, ein Pumpenaggregat mit einem Motorgehäuse und einem Klemmenkasten derart zu verbessern, dass für elektronische Bauteile im Klemmenkasten eine verbesserte Wärmeabfuhr bei gleichzeitig zuverlässiger Abdichtung des Klemmenkastens nach außen erreicht werden kann.

Diese Aufgabe wird durch ein Pumpenaggregat mit den in Anspruch 1 angegebenen Merkmalen gelöst. Bevorzugte Ausführungsformen ergeben sich aus den Unteransprüchen, der nachfolgenden Beschreibung sowie den beigefügten Figuren.

Das erfindungsgemäße Pumpenaggregat weist ein Motorgehäuse und einen Klemmenkasten auf, welcher an der Außenseite des Motorgehäuses angeordnet ist. In dem erfindungsgemäßen Klemmenkasten können elektrische Anschlussklemmen für das Pumpenaggregat und/oder elektronische Bauelemente zur Steuerung bzw. zum Betrieb des Pumpenaggregates angeordnet sein. Insofern kann es sich bei dem Klemmenkasten im Sinne der Erfindung auch um einen Schaltkasten handeln. Der Klemmenkasten weist dabei zumindest einen umfänglichen Abschnitt auf, welcher am Außenumfang des Motor- bzw. Statorgehäuses angeordnet ist. Das Motorgehäuse und der Klemmenkasten sind erfindungsgemäß durch einen gemeinsamen Deckel an der Axialseite des Pumpenaggregates, d.h. an der Stirnseite des Motor-bzw. Statorgehäuses in Richtung der Drehachse gesehen, verschlossen. Der gemeinsame Deckel ist dabei so ausgebildet, dass er die Stirnseite des Motorgehäuses und die Stirnseite des Klemmenkastens jeweils überdeckt. Durch den gemeinsamen Deckel von Klemmenkasten und Motorgehäuse kann eine vereinfachte Montage erreicht werden, da nur ein Deckel zum Verschließen von Motorgehäuse und Klemmenkasten montiert werden muss. Darüber hinaus bietet der große Deckel eine vergrößerte Fläche zur Wärmeabfuhr der im

Klemmenkasten entstehenden Wärme. Es steht nicht nur die Deckeloberfläche des umfänglichen Abschnitts des Klemmenkastens für die Wärmeabfuhr zur Verfügung, sondern eine vergrößerte Oberfläche, da auch zumindest ein Teil der Deckelfläche, welche das Motorgehäuse axialseitig überdeckt, zur Wärmeabfuhr genutzt werden kann. Um die Wärmeabfuhr zu verbessern, ist erfindungsgemäß der Deckel wärmeleitend ausgebildet und an seiner Innenseite in Kontakt mit zumindest einem elektronischen Bauelement. D.h. das elektronische Bauelement im Inneren des Klemmenkastens liegt an der Innenseite des Deckels an, sodass die von dem elektronischen Bauelement erzeugte Verlustwärme auf den Deckel weitergeleitet wird und von diesem an seiner Außenseite nach außen abgeführt werden kann. Auf diese Weise kann auf Kühlkörper im Inneren des Klemmenkastens und insbesondere auf Öffnungen im Klemmenkasten verzichtet werden. Der Klemmenkasten kann vielmehr hermetisch nach außen gedichtet ausgebildet sein, dennoch wird eine gute Wärmeabfuhr eben durch den wärmeleitenden Deckel hindurch gewährleistet.

Der Deckel ist aus einem wärmeleitenden Kunststoff mit einem spezifischen Wärmeleitfähigkeit > 1 W/mK gebildet. Ein solcher Kunststoff vereint mehrere bevorzugte Eigenschaften. Zum einen ist er elektrisch isolierend und erfüllt damit die gewünschten Sicherheitsanforderungen. Zum anderen weist er eine große Wärmeleitfähigkeit auf, welche von Vorteil ist, um die an der Innenseite angeordneten elektronischen Bauteile ausreichend zu kühlen bzw. die Wärmeabfuhr von diesem Bauteilen zu ermöglichen.

Besonders bevorzugt überdeckt der Deckel die axiale Stirnseite des Motorgehäuses und/oder des umfänglichen Abschnitts des Klemmenkastens vollständig. So wird eine maximale Deckelfläche an der Stirnseite geschaffen, durch welche die Wärmeabfuhr aufgrund der größeren Abstrahlfläche verbessert wird. Darüber hinaus kann durch Abnehmen des Deckels die gesamte Axialseite des Statorgehäuses und des Klemmenkastens geöffnet werden, sodass der Stator und Rotor im Inneren des Motorgehäuses voll zugänglich sind und auch eine gute Zugänglichkeit zu den elektronischen Bauteilen und Anschlüssen im Inneren des Klemmenkastens gewährleistet wird.

Weiter bevorzugt ist der Deckel aus einem elektrisch isolierenden Material gefertigt. Dies ist aus Sicherheitsgründen sinnvoll, da so eine Gefährdung von Personen im Falle von Defekten an den elektrischen Komponenten im Inneren des Klemmenkastens vermieden werden können. Vorzugsweise ist der Deckel, wie auch das übrige Gehäuse des Klemmenkastens aus Kunststoff gefertigt.

Alternativ ist es jedoch auch möglich, den Deckel teilweise oder vollständig aus einen elektrisch leitfähigem Material, d.h. insbesondere aus Metall auszubilden. Durch eine solche Ausgestaltung wird zum einen auch eine gute Wärmeleitfähigkeit sichergestellt, zum anderen können metallische bzw. elektrisch leitfähige Teile des Deckels gleichzeitig dazu dienen, elektromagnetische Strahlung, welche von elektronischen Bauteilen im Inneren des Klemmenkastens erzeugt wird, nach außen abzuschirmen. Auf diese Weise kann die elektromagnetische Verträglichkeit des Pumpenaggregates verbessert werden.

Das zumindest eine elektronisches Bauelement im Inneren des Klemmenkastens ist mit dem Deckel vorzugsweise über ein wärmeleitendes Medium, insbesondere eine Wärmeleitpaste oder ein Wärmeleitkissen in Kontakt. Ein solches wärmeleitendes Medium wie eine Wärmeleitpaste oder ein wärmeleitender Klebstoff stellt einen optimalen Wärmeübergang zwischen dem elektronischen Bauelement und dem Deckel her. Wenn kein wärmeleitendes Medium zwischen beiden Teilen angeordnet ist, besteht die Gefahr, dass aufgrund einer dünnen Luftschicht zwischen beiden Teilen die Wärmeleitfähigkeit deutlich verschlechtert ist.

Gemäß einer besonderen Ausführungsform der Erfindung kann das zumindest ein elektrisches Bauelement auch zumindest abschnittsweise in den Deckel integriert sein. Hierdurch kann die Wärmeleitfähigkeit noch weiter verbessert werden, da der Wärmeübergang zwischen dem elektronischen Bauelement und dem Deckel verbessert wird. Darüber hinaus kann auch die Montage vereinfacht werden, da auf einen zusätzlichen Montageschritt zur Anbringung des elektronischen Bauelementes an dem Deckel, ggf. unter Verwendung eines wärmeleitfähigen Mediums, verzichtet werden kann. So kann das elektronische Bauelement besonders bevorzugt in das Material des Deckels, insbesondere Kunststoff, zumindest teilweise eingegossen sein.

Gemäß einer weiteren bevorzugten Ausführungsform kann der Deckel an seiner Außenseite Einbuchtungen und/oder Auskragungen aufweisen, welche die Oberfläche des Deckels an der Außenseite vergrößern. Auf diese Weise wird die Wärmeabstrahlfäche an der Oberfläche vergrößert und die Wärmeabfuhr an die Umgebungsluft verbessert. So bildet der Deckel selber für das elektronische Bauelement an der Innenseite einen Kühlkörper. Die Einbuchtung und/oder Auskragungen können beispielsweise rippenförmig, wie es von Kühlkörpern für elektronische Bauelemente her bekannt ist, ausgebildet sein. Es sind jedoch auch beliebige andere Formgebungen möglich, welche insbesondere an die äußere Formgestaltung von Motorgehäuse und Klemmenkasten angepasst sein kann. An der Innenseite weist der Deckel für das zumindest eine elektronische Bauelement eine geeignete, vorzugsweise plane Anlagefläche auf, welche einen großflächigen Kontakt zwischen Bauelement und Deckel ermöglicht.

Der Deckel kann darüber hinaus bevorzugt den umfänglichen Abschnitt des Klemmenkastens zusätzlich an zumindest einer an die Stirnseite angrenzenden Umfangsseite überdecken. In diesem Fall ist der Deckel nicht als plane Fläche ausgebildet, sondern weist einen abgewinkelten Abschnitt auf, welcher die zumindest eine Umfangsseite des Klemmenkastens überdeckt. Durch diese Ausgestaltung können zwei positive Effekte erreicht werden. Zum einen kann die Deckelfläche zur Verbesserung der Wärmeabfuhr weiter vergrößert werden. Darüber hinaus wird der Bereich des Klemmenkastens, welcher durch Abnehmen des Deckels freigegeben wird, vergrößert. So wird die Zugängigkeit des Innenraumes des Klemmenkastens verbessert.

Besonders bevorzugt weist der Klemmenkasten den umfänglichen Abschnitt und zusätzlich einen axialen Abschnitt auf, welcher am axialen Ende an das Motorgehäuse angesetzt ist, wobei der Deckel die axiale Stirnseite des axialen Abschnittes des Klemmenkastens zumindest teilweise überdeckt. Dies bedeutet, dass der Deckel bei dieser Ausführungsform das Motorgehäuse nicht direkt überdeckt, sondern das zwischen dem die axiale Stirnseite des Motorgehäuses überdeckenden Deckel und dem Motorgehäuse noch ein Abschnitt des Klemmenkastens angeordnet ist. Vorzugsweise ist das Stator- bzw. Motorgehäuse rohrförmig mit einer offenen axialen Stirnseite ausgebildet. Dabei ist diese offene axiale Stirnseite diejenige Stirnseite des Motorgehäuses, welche einer an das Motorgehäuse angesetzten Pumpe abgewandt ist. Der axiale Abschnitt des Klemmenkastens verschließt dabei die axiale Öffnung des Motorgehäuses. Der Klemmenkasten ist wiederum zur Axialseite hin geöffnet, wobei diese Öffnung dann durch den Deckel verschlossen wird. Vorzugsweise ist der Klemmenkasten an seiner Axialseite vollständig durch den Deckel überdeckt. So wird eine besonders große Deckelfläche zur Verbesserung der Wärmeabstrahlung geschaffen. Darüber hinaus kann eine besonders große Öffnung des Klemmenkastens erreicht werden, welcher die Zugängigkeit zum Innenraum des Klemmenskastens verbessert. So kann beispielsweise eine Leiterplatte, welche den Innenraum des Klemmenkastens im Querschnitt nahezu vollständig ausfüllt, durch diese Öffnung in den Klemmenkasten eingesetzt werden. Bevorzugt überdeckt der Deckel auch bei dieser Ausführungsform zusätzlich vollständig das axiale Ende des umfänglichen Abschnittes des Klemmenkastens.

Bevorzugt ist zumindest ein elektronisches Bauelement mit einem Bereich des Deckels in Kontakt, welcher das Motorgehäuse stirnseitig überdeckt. Auf diese Weise kann das elektronische Bauelement beispielsweise sehr zentral an dem Deckel angeordnet werden, sodass eine gleichmäßige Wärmeverteilung in dem Deckel und somit eine optimale Wärmeabfuhr erreicht werden kann.

Weiter bevorzugt ist zusätzlich oder alternativ zumindest ein elektronisches Bauelement mit einem Bereich des Deckels in Kontakt, welcher den umfänglichen Abschnitt des Klemmenkastens überdeckt. Dies kann ein Abschnitt des Deckels sein, welcher den umfänglichen Abschnitt axialseitig und/oder an der Umfangsseite überdeckt. So können auch in diesem Bereich des Klemmenkastens Bauelemente angeordnet werden, deren Abwärme über den Deckel abgeführt wird.
Nachfolgend wird die Erfindung beispielhaft anhand der beigefügten Figuren beschrieben. In diesen zeigt:
- Fig. 1: eine schematische Schnittansicht eines Pumpenaggregates gemäß einer ersten Ausführungsform der Erfindung,
- Fig. 2: eine schematische Schnittansicht eines Pumpenaggregates gemäß einer zweiten Ausführungsform der Erfindung und
- Fig. 3: eine schematische Schnittansicht einer dritten Ausführungsform gemäß der Erfindung.

Das erfindungsgemäße Pumpenaggregat weist in allen drei gezeigten Ausführungsformen in bekannter Weise ein Pumpengehäuse 2 auf, in welchem ein hier nicht gezeigtes Laufrad angeordnet wird. An das Pumpengehäuse 2 angesetzt ist ein Stator- bzw. Motorgehäuse 4. Das Motorgehäuse 4 ist im Wesentlichen rohrförmig ausgebildet und dient zur Aufnahme des hier nicht gezeigten elektrischen Antriebsmotors. Das rohrförmige Motorgehäuse 4 ist an seinen in Richtung der Längsachse X entgegengesetzten Axialenden offen ausgebildet. Mit dem einen Axialende ist es an das Pumpengehäuse 2 angesetzt, sodass das Pumpengehäuse 2 das erste offene Axialende des Motorgehäuses 4 verschließt. An seinem dem Pumpengehäuse 2 abgewandten Axialende des Motorgehäuses 4 ist dieses durch einen axial angesetzten Klemmenkasten verschlossen. Der Klemmenkasten 6 weist zwei Abschnitte auf, nämlich einen axialen Abschnitt 8 und einen umfänglichen Abschnitt 10. Der axiale Abschnitt 8 erstreckt sich in axialer Verlängerung des Motorgehäuses 4 und verschließt dieses an seiner offenen axialen Stirnseite. Der umfängliche Abschnitt 10 des Klemmenkastens erstreckt sich von dem axialen Abschnitt 8 radial nach außen und umgibt einen Teil des Motorgehäuses 4 an dessen Umfang. Dabei erstreckt sich der umfängliche Abschnitt 10 nicht über den gesamten Umfang des Motorgehäuses 4, sondern nur über einen Abschnitt des Umfangs. Dabei ist in dem hier gezeigten Beispiel der umfängliche Abschnitt 10 in seiner axialen Erstreckung parallel zur Längsachse X länger ausgebildet als der axiale Abschnitt des Klemmenkastens 6. Der umfängliche Abschnitt 10 erstreckt sich in Richtung auf das Pumpengehäuse 2 zu in axialer Richtung weiter als der axiale Abschnitt 8. An dem dem Pumpengehäuse 2 abgewandten Axialende ist die Erstreckung des axialen Abschnittes 8 und des umfänglichen Abschnittes 10 in Richtung der Längsachse X im Wesentlichen gleich. Diese axiale Stirnseite des Motorgehäuses 4 und des Klemmenkastens 6, welche dem Pumpengehäuse 2 abgewandt ist, ist durch einen Deckel 12, 12', 12" verschlossen. Der Deckel 12, 12', 12" überdeckt und verschließt das offene axiale Ende des Klemmenkastens 6. Dabei überdeckt der Deckel 12, 12', 12" den Klemmenkasten und damit das Motorgehäuse 4 an dessen dem Pumpengehäuse 2 abgewandten Axialende und darüber hinaus auch die Axialseite des umfänglichen Abschnittes 10 des Klemmenkastens.

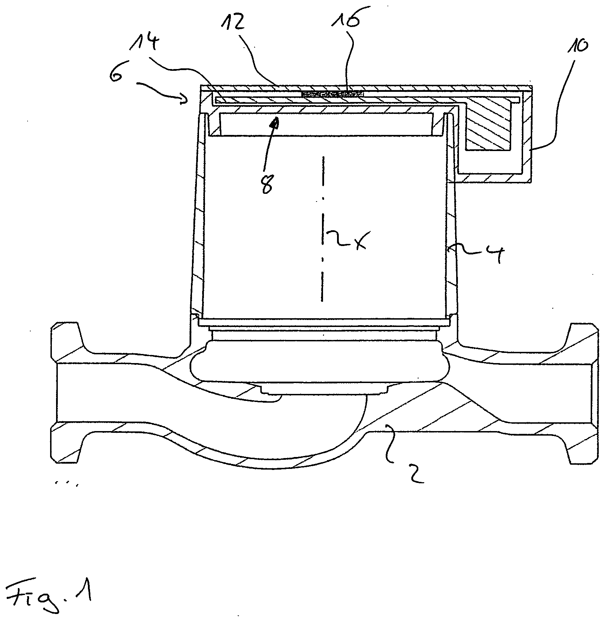

Bei dem Ausführungsbeispiel gemäß Fig. 1 ist der Deckel 12 als plane Platte aus einem wärmeleitfähigen Kunststoff ausgebildet. Im Inneren des Klemmenkastens 6 ist ein elektronisches Bauteil 14, beispielsweise eine Leiterplatte mit darauf angeordneten elektronischen Bauelementen angeordnet. Das elektronische Bauteil 14 ist über ein wärmeleitendes Medium 16 direkt mit der Innenseite, d.h. der dem Innenraum des Klemmenkastens 6 zugewandten Seite des Deckels 12 wärmeleitend verbunden. Auf diese Weise wird ein guter Wärmeübergang bzw. eine gute Wärmeleitfähigkeit von dem elektronischen Bauteil 14 auf den Deckel 12 gewährleistet. Durch die Wärmeleitfähigkeit des Deckels 12 wird die Wärme dann im Deckel 12 verteilt und über die große Deckelfläche nach außen abgestrahlt. Da die Fläche des Deckels die gesamte Axialseite des Motorgehäuses 4 und des umfänglichen Abschnittes 10 des Klemmenkastens überdeckt, wird so eine maximal große Deckelfläche geschaffen. Das wärmeleitende Medium 16 ist vorzugsweise direkt auf einem elektronischen Bauelement 14, beispielsweise einem Leistungsschalter aufgebracht, sodass dessen Abwärme direkt an den Deckel 12 abgeführt werden kann.

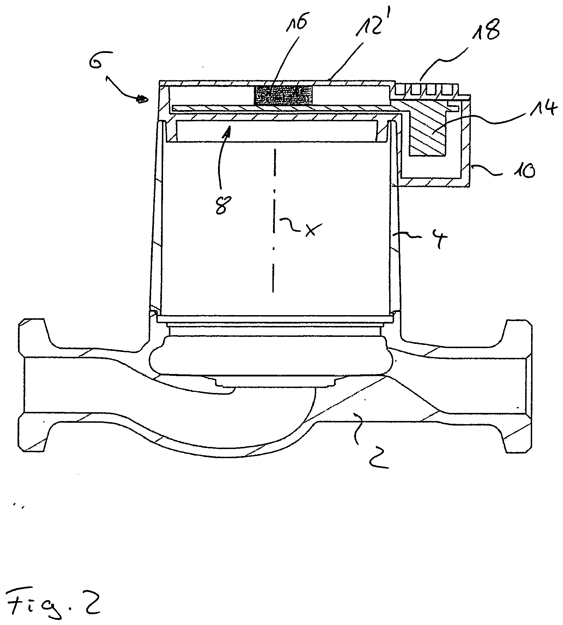

Bei dem Ausführungsbeispiel gemäß Fig. 2 entspricht die Anordnung des elektronischen Bauteils 14 mit dem wärmeleitenden Medium 16 an der Innenseite des Deckels 12' der Anordnung gemäß Fig. 1, lediglich die geometrischen Abmessungen weichen hier leicht ab. Wesentlicher Unterschied der Ausführungsform gemäß Fig. 2 von der Ausführungsform gemäß Fig. 1 ist die Form des Deckels 12'. Dieser ist vorzugsweise ebenfalls aus wärmeleitfähigem Kunststoff ausgebildet, jedoch nicht als plane Platte. So ist der Bereich, welcher den umfänglichen Abschnitt 10 des Klemmenkastens 6 überdeckt gegenüber dem Bereich, welcher das axiale Ende des axialen Abschnittes 8 überdeckt in axialer Richtung gestuft ausgebildet. In diesem Bereich am umfänglichen Abschnitt 10 sind an dem Deckel 12' zusätzlich Kühlrippen 18 ausgeformt. Durch diese wird die Wärmeabstrahlung an die umgebende Luft aufgrund der vergrößerten Oberfläche des Deckels 12' verbessert. In dem Bereich der Kühlrippen 18 ist das elektronische Bauteil 14 an der Innenseite des Deckels 12' in Anlage, sodass dort ein direkter Wärmeübergang zu dem Deckel 12' und damit zu den Kühlrippen 18 gewährleistet wird. Auch dort kann ein wärmeleitfähiges Medium zwischen dem elektronischen Bauteil 14 und dem Deckel 12' angeordnet sein, um den Wärmeübergang zu verbessern.

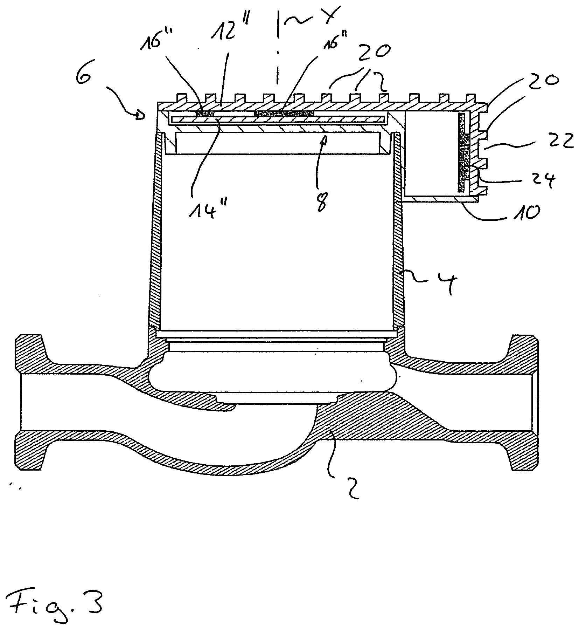

Bei der dritten Ausführungsform gemäß Fig. 3 weist der Deckel 12' an seiner Außenseite nach außen gerichtete Rippen bzw. Vorsprünge 20 auf. Auch diese bilden Kühlrippen, welche die Oberfläche des Deckels 12' an seiner Außenseite vergrößern, um dort eine vergrößerte Wärmeabstrahlfläche zu schaffen. Darüber hinaus ist bei dieser Ausführungsform der Deckel 12' so ausgebildet, dass er sich nicht nur über die axiale Seite des Klemmenkastens 6 erstreckt, sondern auch gleichzeitig eine Seiten- bzw. Umfangswandung des umfänglichen Abschnittes 10 überdeckt. Diese Umfangswandung 22 ist ebenfalls mit den Rippen bzw. Vorsprüngen 20 versehen. Die Umfangswandung 22 erstreckt sich im Wesentlichen im rechten Winkel zu dem übrigen Teil des Deckels 12", welcher die axiale Seite des Klemmenkastens 6 überdeckt. Diese gewinkelte vergrößerte Ausgestaltung des Deckels 12" hat zum einen den Vorteil, dass die Deckelfläche und somit die Fläche, über welche die Wärme abgeleitet werden kann, vergrößert wird. Zum anderen wird die Öffnung des Klemmenkastens 6 und insbesondere des umfänglichen Abschnittes des Klemmenkastens 10 vergrößert, sodass der Innenraum des Klemmenkastens besser zugänglich ist.

Bei der dritten Ausführungsform ist ein elektronisches Bauteil 14" entsprechend den ersten beiden Ausführungsformen in dem axialen Bereich des Klemmenkastens 8 angeordnet und dort an mehreren Stellen über ein wärmeleitendes Medium 16" mit der Innenseite des Deckels 12" wärmeleitend in Anlage. Die Bereiche, welche hier wärmeleitend in Anlage sind, sind vorzugsweise die Bereiche einer Leiterplatte, bzw. eine Anordnung von elektronischen Bauelementen, an denen besonders viel Abwärme erzeugt wird, beispielsweise handelt es sich hierbei um Leistungsschalter der Elektronik, welche bevorzugt mit der Innenseite des Deckels 12" zur Wärmeabfuhr in Anlage sind.

Bei der Ausführungsform gemäß Fig. 3 ist darüber hinaus ein weiteres elektronisches Bauteil 24 in dem umfänglichen Abschnitt 10 des Klemmenkastens mit der Innenseite der Umfangswandung 22 wärmeleitend in Anlage. So kann die von diesem elektronischen Bauteil 24 erzeugt Abwärme direkt über die Umfangswandung 22 nach außen abgeleitet werden.

Allen drei gezeigten Ausführungsformen gemeinsam ist, das der Deckel 12, 12', 12" es ermöglicht, dass der Klemmenkasten 6 nach außen vollständig verschlossen wird, ohne dass Kühl- oder Lüftungsöffnungen erforderlich wären. Die wärmeerzeugenden elektronischen Bauelemente bzw. Bauteile liegen an der Innenseite an dem wärmeleitfähigen Deckel an, sodass die Abwärme der Bauteile über den Deckel nach außen abgeleitet wird. Es ist zu verstehen, dass die geometrische Gestaltung der Deckel 12, 12', 12" auch abweichend ausgebildet werden kann, insbesondere an Form und Gestaltung des gesamten Pumpenaggregats angepasst werden kann. Gleichzeitig ist es dabei bevorzugt, die Oberfläche des Deckels 12, 12', 12" insbesondere in den Bereichen an der Außenseite durch Kühlrippen 18 oder Vorsprünge 20 zu vergrö-ßern, welche über den an der Innenseite angeordneten elektronischen Bauelementen liegen, deren Abwärme abgeführt werden soll.

**Bezugszeichenliste**

| | | |
|---|---|---|
| 2 | - | Pumpengehäuse |
| 4 | - | Motorgehäuse |
| 6 | - | Klemmenkasten |
| 8 | - | Axialer Abschnitt |
| 10 | - | Umfänglicher Abschnitt |
| 12, 12', 12" | - | Deckel |
| 14, 14" | - | Elektronisches Bauteil |
| 16, 16" | - | Wärmeleitendes Medium |
| 18 | - | Kühlrippen |
| 20 | - | Vorsprünge |
| 22 | - | Umfangswandung |
| 24 | - | Elektronisches Bauteil |
| X | - | Längsachse |

## Patentansprüche

1. Pumpenaggregat mit einem Motorgehäuse (4) und einem Klemmenkasten (6), welcher sich in axialer Verlängerung des Motorgehäuses (4) erstreckt sowie zumindest einen umfänglichen Abschnitt (10) aufweist, der am Außenumfang des Motorgehäuses (4) gelegen ist,
**dadurch gekennzeichnet, dass**
der Klemmenkasten (6) das Motorgehäuse (4) an seiner offenen axialen Stirnseite verschließt,
ein Deckel (12; 12'; 12") vorgesehen ist, welcher das Motorgehäuse (4) und den umfänglichen Abschnitt (10) des Klemmenkastens (6) an einer axialen Stirnseite überdeckt, so dass der Klemmenkasten (6) ohne Kühl- oder Lüftungsöffnungen nach außen vollständig verschlossen ist,
der Deckel (12; 12'; 12") aus einem wärmeleitenden Kunststoff mit einer spezifischen Wärmeleitfähigkeit größer 1W/mK ausgebildet ist, und dass
zumindest ein Verlustwärme erzeugendes elektronisches Bauelement (14; 14"; 24) im Inneren des Klemmenkastens (6) an der Innenseite des Deckels (12, 12', 12") derart anliegt, dass die von dem elektronischen Bauelement (14; 14"; 24) erzeugte Verlustwärme auf den Deckel weitergeleitet wird und von diesem an seiner Außenseite nach außen geführt werden kann.

2. Pumpenaggregat nach Anspruch 1, **dadurch gekennzeichnet, dass** der Deckel (12; 12'; 12") die axiale Stirnseite des Motorgehäuses (4) und/oder des umfänglichen Abschnittes (10) des Klemmenkastens (6) vollständig überdeckt.

3. Pumpenaggregat nach Anspruch 1 oder 2, **dadurch gekennzeichnet, dass** der Deckel (12; 12'; 12") aus einem elektrisch isolierendem Material gefertigt ist.

4. Pumpenaggregat nach einem der vorangehenden Ansprüche, **dadurch gekennzeichnet, dass** das zumindest eine elektronische Bauelement (14; 14"; 24) mit dem Deckel (12; 12'; 12") über ein wärmeleitendes Medium (16; 16"), insbesondere eine Wärmeleitpaste oder ein Wärmeleitkissen in Kontakt ist.

5. Pumpenaggregat nach einem der vorangehenden Ansprüche, **dadurch gekennzeichnet, dass** das zumindest eine elektronische Bauelement zumindest abschnittsweise in den Deckel (12; 12'; 12") integriert ist.

6. Pumpenaggregat nach Anspruch 5, **dadurch gekennzeichnet, dass** das zumindest eine elektronische Bauelement in den Deckel (12; 12'; 12") eingegossen ist.

7. Pumpenaggregat nach einem der vorangehenden Ansprüche, **dadurch gekennzeichnet, dass** der Deckel (12'; 12") an seiner Au-ßenseite Einbuchtungen und/oder Auskragungen (18, 20) aufweist, welche die Oberfläche vergrößern.

8. Pumpenaggregat nach einem der vorangehenden Ansprüche, **dadurch gekennzeichnet, dass** der Deckel (12") den umfänglichen Abschnitt (10) des Klemmenkastens (6) zusätzlich an zumindest einer an die Stirnseite angrenzenden Umfangsseite (22) überdeckt.

9. Pumpenaggregat nach einem der vorangehenden Ansprüche, **dadurch gekennzeichnet, dass** der Klemmenkasten (6) den umfänglichen Abschnitt (10) und einen axialen Abschnitt (8) aufweist, welcher am axialen Ende an das Motorgehäuse (4) angesetzt ist, wobei der Deckel (12; 12'; 12") die axiale Stirnseite des axialen Abschnittes (8) des Klemmenkastens (6) zumindest teilweise überdeckt.

10. Pumpenaggregat nach einem der vorangehenden Ansprüche, **dadurch gekennzeichnet, dass** zumindest ein elektronisches Bauelement (14; 14") mit einem Bereich des Deckels (12; 12'; 12") in Kontakt ist, welcher das Motorgehäuse (4) stirnseitig überdeckt.

11. Pumpenaggregat nach einem der vorangehenden Ansprüche, **dadurch gekennzeichnet, dass** zumindest ein elektronisches Bauelement (14) mit einem Bereich des Deckels (12') in Kontakt ist, welcher den umfänglichen Abschnitt (10) des Klemmenkastens (6) überdeckt.

## Claims

1. A pump assembly with a motor housing (4) and with a terminal box (6) which extends in the axial extension of the motor housing (4) as well as comprises at least one peripheral section (10) which is situated on the outer periphery of the motor housing (4), **characterised in that**
the terminal box (6) closes the motor housing (4) at its open axial face side,
a cover (12; 12'; 12") is provided, said cover covering the motor housing (4) and the peripheral section (10) of the terminal box (6) at an axial face side, so that the terminal box (6) is completely closed to the outside without cooling or ventilation openings,
the cover (12; 12'; 12") is formed of a thermally conductive plastic with a specific thermal conductivity of larger than 1 W/mk, and that at least one electronic component (14; 14"; 24) which produces waste heat, in the inside of the terminal box (6) bears on the inner side of the cover (12; 12'; 12") in a manner such that the waste heat which is produced by the electronic component (14; 14"; 24) is led further onto the cover and can be led away to the outside from this cover at its outer side.

2. A pump assembly according to claim 1, **characterised in that** the cover (12; 12'; 12") completely covers the axial face side of the motor housing (4) and/or of the peripheral section (10) of the terminal box (6).

3. A pump assembly according to claim 1 or 2, **characterised in that** the cover (12; 12'; 12") is manufactured of an electrically insulating material.

4. A pump assembly according to one of the preceding claims, **characterised in that** the at least one electronic component (14; 14"; 24) is in contact with the cover (12; 12'; 12") via a thermally conductive medium (16; 16"), in particular a thermally conductive paste or a thermally conductive pad.

5. A pump assembly according to one of the preceding claims, **characterised in that** the at least one electronic component is integrated at least in sections into the cover (12; 12'; 12").

6. A pump assembly according to claim 5, **characterised in that** the at least one electronic component is moulded into the cover (12, 12', 12").

7. A pump assembly according to one of the preceding claims, **characterised in that** the cover (12'; 12") on its outer side comprises indentations and/or projections (18, 20) which enlarge the surface.

8. A pump assembly according to one of the preceding claims, **characterised in that** the cover (12") covers the peripheral section (10) of the terminal box (6) additionally on at least one peripheral side (22) which is adjacent to the face side.

9. A pump assembly according to one of the preceding claims, **characterised in that** the terminal box (6) comprises the peripheral section (10) and an axial section (8) which is attached at the axial end onto the motor housing (4), wherein the cover (12; 12'; 12") at least partly covers the axial face side of the axial section (8) of the terminal box (6).

10. A pump assembly according to one of the preceding claims, **characterised in that** at least one electronic component (14; 14") is in contact with a region of the cover (12; 12'; 12") which covers the motor housing (4) at the face side.

11. A pump assembly according to one of the preceding claims, **characterised in that** at least one electronic component (14) is in contact with a region of the cover (12') which covers the peripheral section (10) of the terminal box (6).

## Revendications

1. Groupe motopompe comportant un carter de moteur (4) et une boîte à bornes (6) qui s'étend dans le prolongement axial du carter de moteur (4) et présente au moins un segment périphérique (10) qui est placé sur la périphérie externe du carter de moteur (4),
**caractérisé en ce que**
la boîte à bornes (6) ferme le carter de moteur (4) sur sa face avant axiale ouverte,
il est prévu un capot (12; 12'; 12") qui recouvre le carter de moteur (4) et le segment périphérique (10) de la boîte à bornes (6) au niveau d'une face frontale axiale de façon telle que la boîte à bornes (6) soit entièrement fermée vers l'extérieur sans ouvertures de refroidissement ou d'aération,
le capot (12; 12'; 12") est formé d'une matière plastique conductrice de chaleur présentant une conductibilité thermique spécifique supérieure à 1 W/mK, et **en ce que** au moins un module électronique (14; 14" ; 24) générant des pertes thermiques repose à l'intérieur de la boîte à bornes (6) sur la face interne du capot (12; 12' ; 12") de façon telle que les pertes thermiques générées par le module électronique (14; 14". 24) soient transmises sur le capot et peuvent depuis celui-ci être guidées sur sa face externe vers l'extérieur.

2. Groupe motopompe selon la revendication 1, **caractérisé en ce que** le capot (12; 12' ; 12") recouvre entièrement la face avant axiale du carter de moteur (4) et/ou du segment périphérique (10) de la boîte à bornes (6).

3. Groupe motopompe selon la revendication 1 ou 2, **caractérisé en ce que** le capot (12; 12' ; 12") est fabriqué à partir d'un matériau électriquement isolant.

4. Groupe motopompe selon l'une des revendications précédentes, **caractérisé en ce que** le module électronique (14; 14" ; 24), au moins au nombre de un, est en contact avec le capot (12; 12' ; 12") par l'intermédiaire d'un moyen conducteur de chaleur (16; 16"), en particulier une pâte conductrice de chaleur ou un coussin conducteur de chaleur.

5. Groupe motopompe selon l'une des revendications précédentes, **caractérisé en ce que** le module électronique, au moins au nombre de un, est intégré au moins par segments dans le capot (12; 12' ; 12").

6. Groupe motopompe selon la revendication 5, **caractérisé en ce que** le module électronique, au moins au nombre de un, est coulé dans le capot (12; 12' ; 12").

7. Groupe motopompe selon l'une des revendications précédentes, **caractérisé en ce que** le capot (12'; 12") présente sur son côté externe des échancrures et/ou des saillies (18, 20) qui augmentent la surface.

8. Groupe motopompe selon l'une des revendications précédentes, **caractérisé en ce que** le capot (12") recouvre de plus le segment périphérique (10) de la boîte à bornes (6) au niveau d'au moins une face périphérique (22) contiguë à la face avant.

9. Groupe motopompe selon l'une des revendications précédentes, **caractérisé en ce que** la boîte à bornes (6) présente le segment périphérique (10) et un segment axial (8) qui est ajouté au niveau de l'extrémité axiale sur le carter de moteur (4), le capot (12; 12' ; 12") recouvrant au moins partiellement la face avant axiale du segment axial (8) de la boîte à bornes (6).

10. Groupe motopompe selon l'une des revendications précédentes, **caractérisé en ce qu'**au moins un module électronique (14; 14") est en contact avec une zone du capot (12; 12'; 12") qui recouvre le carter de moteur (4) au niveau de la face avant.

11. Groupe motopompe selon l'une des revendications précédentes, **caractérisé en ce qu'**au moins un boîtier électronique (14) est en contact avec une zone du capot (12') qui recouvre le segment périphérique (10) de la boîte à bornes (6).
